# EUROPEAN PATENT APPLICATION

(11) **EP 1 912 175 A1**
(43) Date of publication of application: **16.04.2008**
(21) Application number: 06021117.4
(22) Date of filing: 09.10.2006
(51) Int. Cl.: G06T 15/70

(54) **System and method for generating a video signal**

(71) Applicant: Muzlach AG, 9496 Balzers (LI)
(72) Inventor: Weibel, Marcel, 8005 Zürich (CH); Auerbach, Andreas, 8126 Zumikon (CH); Parish, Yoav Ilan Haim, 8047 Zürich (CH)
(74) Representative: Vogel, Dany

(57) **Abstract**

For generating a live video signal (51), a voice signal (41) is received from a remote viewer (2) via a telecommunications network (4). Determined from the voice signal (41) is corresponding lip movement data. Furthermore, in response to the voice signal (41), body motion data is generated. The body motion data is generated based on animation data representative of body motions performed by a human actor (7) in response to the voice signal (41) and captured by a motion capturing system. An animated graphical avatar (97) is generated in real-time and assigned to the remote viewer (2), lip movements of the avatar (97) being controlled by the lip movement data, and body motions of the avatar (97) being controlled by the body motion data. A live video signal (51) is generated for broadcasting to remote display devices (3), e.g. a television set, the live video signal (51) including an animated video scene (90) with at least the animated graphical avatar (97) and an audio component comprising the voice signal (41). The remote viewer (2) can be integrated dynamically and effectively in a live television broadcast as an animated avatar (97), moving lips and body in synch and in accordance with his voice.

## Description

### Field of the Invention

The present invention relates to a system and method for generating a video signal. Specifically, the present invention relates to a computer-based system and method for generating a live video signal in real-time for broadcasting to remote display devices such as television sets.

### Background of the Invention

Active and live participation of callers from among the audience of radio broadcasting programs is quite popular. Typically, the caller's voice is put on the air by feeding the voice signal from the telephone line into the broadcasting system. The same approach is being used in television broadcasts where the voice of a participating viewer is fed into the audio component of the television signal. In some instances, when a photograph of the caller is available, this photograph is captured and broadcasted as a static picture in the video component of the television signal. Broadcasting and displaying static pictures of viewing participants as part of a television program, is not very attractive neither for the viewing audience nor for the participant.

### Summary of the Invention

It is an object of this invention to provide a system and a method for generating a video signal, which system and method do not have the disadvantages of the prior art. In particular, it is an object of the present invention to provide a computer-based system and a computer-based method for generating a live video signal, which system and method make it possible that a remote viewer can be integrated more dynamically in an audio/video signal than including merely static image data in the video signal.

According to the present invention, these objects are achieved particularly through the features of the independent claims. In addition, further advantageous embodiments follow from the dependent claims and the description.

According to the present invention, the above-mentioned objects are particularly achieved in that, for generating a video signal, a voice signal from a remote viewer is received in a computerized system via a telecommunications network. From the voice signal, corresponding lip movement data is generated in the system. Moreover, in response to the voice signal, generated in the system is body motion data representative of body motions performed by a human, for example. Generated in real-time in the system is an animated graphical avatar, assigned to the remote viewer, the lip movements of the avatar being controlled by the lip movement data, and the body motions of the avatar being controlled by the body motion data. Generated in the system is a live video signal for broadcasting to remote display devices, the live video signal including at least the animated graphical avatar and an audio component with the voice signal. Generating a live audio/video signal with a real-time animation of an avatar that represents the remote viewer and moves its lips according to the voice signal received from the viewer, makes it possible to integrate a remote viewer dynamically into broadcasted video programs, for example into television programs such as game shows. Thus the remote viewer can be represented live in a television show controlling through his voice the lip movement of an avatar.

Preferably, the body motion data is generated based on animation data representative of body motions performed by a human actor in response to the voice signal and captured by a conventional motion capturing system. Performing body motions by an actor responding to and interpreting the voice signal received from the remote viewer makes it possible to make the avatar move in accordance with the semantic context, mood and tone conveyed in the statements voiced by the remote viewer. Alternatively and preferred less, the body motion data is generated automatically based on defined rules for simulating the avatar's body movements in response to the voice signal received from the remote viewer, taking into consideration, for example, the rhythm of the voice and/or keywords detected in the voice signal.

Preferably, the system tracks latencies of the voice signal, the lip movement data, the body motion data and the animated graphical avatar, and synchronizes the voice signal and the animated graphical avatar, including the lip movement and the body motion of the avatar, to a defined maximum time delay from receiving the voice signal. By tracking the latencies of data and signals involved in generating the live audio/video signal, data and signals can be associated with respective processing cycles and synchronized with the corresponding cycle time. Moreover, imposing the cycle time as a time constraint on data and signal processing ensures that the live video signal is generated in real-time.

Preferably, the system delays the voice signal by the defined maximum time delay, e.g. the cycle time, to ensure that the live video signal, generated within the defined maximum time delay, is ready for synchronizing with the voice signal. Thus the video component and the audio component of the audio/video signal can be provided and synchronized within set real-time constraints. Consequently, it can be ensured that the voice signal, included in the audio/video signal, is received at the remote viewer's location in synch with the avatar's lip movements and within a maximum turnaround time.

In an embodiment, for generating the body motion data, read within a defined maximum time delay, i.e. in real-time, is animation data, representative of spatial locations of reflective markers attached to one or more human actors. Furthermore, the body motion data, associated with the one or more human actors, is determined from the animation data within the defined maximum time delay, e.g. the cycle time.

In a further embodiment, a camera signal is received in the system from a video camera. Generated in the system is camera orientation data representative of a spatial orientation of the video camera, and, based on the camera orientation data, generated is a view of a virtual set and of a pictorial representation of a real person, e.g, a game show host, conveyed by the camera signal.

In another embodiment, facial expression data is generated in the system based on voice commands captured from the actor assigned to the remote viewer. Generating the animated graphical avatar includes controlling facial expressions of the avatar based on the facial expression data. Thus in addition to lip movements synchronized to the talking voice of the viewer, the avatar also shows concurrently facial expressions corresponding to semantic content, mood and tone of the statements voiced by the viewer.

In a particular embodiment, e.g. in the context of a live television game show, the system generates an animated video scene comprising a view of a virtual set, positioned in the set being the animated graphical avatar assigned to the remote viewer, e.g. a game participant, a pictorial representation of one or more real persons, e.g. the game show host and further studio guests, conveyed by a camera signal filtered through a chroma keying module, and one or more further animated graphical avatars generated based on body motion data captured from one or more further human actors, e.g. assigned to other digital characters of the game show. The system tracks the latencies of the voice signal received from the remote viewer, the lip movement data, the facial expression data, the body motion data, the animated graphical avatars, and the camera signal. The latencies are tracked, for example, with respect to the voice signal received from the remote viewer based on individual time stamps included and/or assigned to the data or signals, respectively. The system synchronizes the voice signal received from the remote viewer, the camera signal and the animated graphical avatar, including the lip movement and the body motion of the avatar, to a defined maximum time delay from receiving the voice signal, e.g. the cycle time, and generates the live video signal including the animated video scene.

In a further embodiment, the system receives from a human operator command signals for selecting and adjusting virtual cameras to define a view of the virtual set, for selecting and assigning graphical avatars to one or more human actors, for selecting and altering the virtual set, and/or for selecting and adjusting lighting and lighting effects in the virtual set. The system controls the generating of the animated video scene and particularly the graphical avatar responsive and corresponding to the command signals received.

In addition to the computer-based system and method for generating the live video signal, the present invention also relates to a corresponding computer program product including computer program code means for controlling one or more processors of a computer-based system such that the system executes the method for generating the live video signal. Particularly, the present invention also relates to a computer program product including a computer readable medium containing therein the computer program code means.

### Brief Description of the Drawings

The present invention will be explained in more detail, by way of example, with reference to the drawings in which:
Figure 1 shows a block diagram illustrating schematically an exemplary configuration of a computerized system for generating a live video signal that includes a graphical avatar which is animated in real-time based on voice input from a remote viewer.
Figure 2 shows a flow diagram illustrating schematically an example of a sequence of steps executed according to the present invention for generating the video signal.

### Detailed Description of the Preferred Embodiments

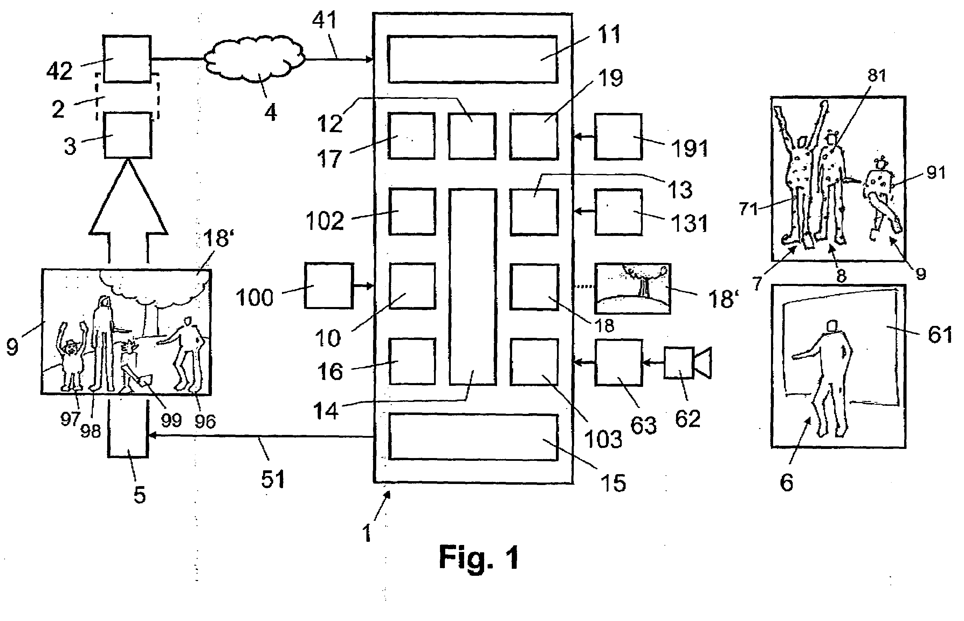

In Figure 1, reference numeral 1 refers to a computerized system for generating a live video signal 51 in real-time. The system 1 includes one or more computers, for example personal computers, comprising one or more processors. As is illustrated schematically, the system 1 is connected to different peripheral devices. Reference numeral 191 refers to a microphone for capturing voice input from an actor 7. The system 1 is also connected to components of a conventional motion capturing system 131 comprising cameras and a lighting system for capturing animation data related to the movements of actors 7, 8, 9 wearing reflective markers 71, 81, 91 on their body or body suits, respectively. Reference numeral 62 refers to a video camera that is provided with reflective markers 621. The reflective markers 621 are arranged for the motion capturing system 131 to determine animation data related to the movement and thus the spatial orientation of the video camera 62. The video camera 62 is linked to the system 1 via a conventional chroma keying module 63 configured to lift off a monochromatic background, e.g. a blue or green screen 61, a pictorial representation of a real person 6, playing the role of a game show host, for example. The system 1 is also connected to an operator console 100 comprising operating elements for a human operator 101 to enter command signals for the system 1 and to receive audio, video and control signals from the system 1.

As is illustrated schematically in Figure 1, for receiving voice signals 41, the system 1 is connected via a telecommunications network 4 to a remote viewer 2 using a terminal for voice communication, e.g. a telephone 42. The telecommunications network 4 comprises a fixed communication network, such as a PSTN (Public Switched Telephone Network) or an ISDN (Integrated Services Digital Network), and/or a mobile radio network, such as a GSM (Global System for Mobile Communication) or UMTS (Universal Mobile Telecommunication System) network, Furthermore, for providing live video (and audio) signals to the remote viewer 2, the system 1 is connected via a broadcasting channel 5 to a display device 3 at the viewer's remote location. Preferably, the display device 3 is a conventional television set connected via a cable network or over the air. One skilled in the art will understand, however, that other display devices, e.g. a personal computer, and/or broadcasting channels, e.g. the Internet or a fixed or wireless LAN (Local Area Network), can be used for providing live video/audio signals to the remote viewer 2.

As is illustrated in Figure 1, the system 1 includes various functional modules namely an operating module 10, a communication module 11, a lip movement detection module 12, a motion determination module 13, a rendering module 14, a video generating module 15, a control module 16, a voice recognition module 19, and an audio control module 102. The system 1 further comprises a delay element 17, one or more virtual sets 18, and a camera interface 103. Preferably, the functional modules are implemented as programmed software modules. The computer program code of the software modules is stored in a computer program product, i.e. in a computer readable medium, either in memory integrated in a computer of the system 1 or on a data carrier that can be inserted into a computer of the system 1. One skilled in the art will understand that the functional modules can also be implemented fully or partly by means of hardware elements.

The communication module 11 is configured to receive from the remote user 2 voice signals 41 via the telecommunications network 4. For example, the communication module 11 includes an interactive voice response system.

The audio control module 102 is configured to receive voice signals from various sources, including the communication module 11 (from the remote viewer 2), a microphone assigned to the real person 6 (host), and the microphone 191 assigned to actor 7 (assigned to the avatar representing the remote viewer). The audio control module 102 forwards the voice signal 41 from the remote viewer 2 to the lip movement detection module 12 and to the delay element 17. Moreover, audio control module 102 forwards the voice signal from actor 7 to the voice recognition module 19, and the voice signal from the real person 6 to the rendering module 14 and/or the video generating module 15.

The lip movement detection module 12 is configured to generate from the voice signal 41 received from the remote viewer 2 corresponding lip movement data, preferably the lip movement data comprises visemes, i.e. basic units of speech in the visual domain that correspond to phonemes, the basic unit of speech in the acoustic domain. A viseme describes the particular facial and oral movements that occur when the phonemes are voiced.

The motion determination module 13 is configured to access and/or receive from the motion capturing system 131 captured animation data related to movements of actors 7, 8, 9 and the video camera(s) 62. From the animation data related to the movements of actors 7, 8, 9, the motion determination module 13 generates body motion data representative of the body motions performed by the actors 7, 8, 9, preferably in the form of skeleton motions. From the animation data related to the movements of the video camera 62(s), the motion determination module 13 determines the spatial orientation of the video camera(s) 62. In an embodiment, the motion determination module 13 receives from the motion capturing system 131 the body motion data and the spatial orientation data. In an alternative embodiment, the motion determination module 13 is configured to generate the body motion data from the voice signal 41 received from the remote viewer 2 based on defines rules.

The voice recognition module 19 is configured to receive from microphone 191 a voice signal from actor 7, to detect and recognize defined voice commands or keywords in the voice signal, e.g. "sad", "happy", "angry", "excited", etc., and to generate facial expression data assigned to the detected command or keyword. For example, the facial expression data define respective emotional blend shapes applicable to the face of a graphical avatar.

The camera interface 103 is configured to receive selectively camera (video) signals from one or more video cameras 62. Depending on the embodiment, the camera (video) signals are received via the chroma keying module 63 or, if the chroma keying module 63 is implemented as part of the camera interface 103, directly from the video camera(s) 62.

The virtual sets 18 each include set definition data defining a 3D space and 3D objects arranged in this space. Preferably, a set identifier is assigned to each of the virtual sets 18. An example of a visual representation of a virtual set is indicated by reference numeral 18'.

The operating module 10 is configured to receive from the operator console 100 command signals from the operator 101. The command signals relate to the selection and configuration (alteration, setting) of a selected one of the virtual sets 18, and to the selection and adjustment of the lighting in the virtual set. The command signals also relate to the selection and setting (spatial orientation, focus) of virtual cameras positioned in the virtual space that is defined by the selected virtual set 18. Furthermore, the command signals relate to the selection and assignment of graphical avatars 97, 98, 99 to one or more human actors 7, 8, 9. The command signals may also relate to the control of audio signals to be included in the audio component accompanying the animated video scene 90. Responsive and corresponding to the received command signals, the operating module 10 controls the rendering module 14.

The rendering module 14 is configured, based on the selections and settings provided by the operating module 10, to generate an animated video scene using the selected virtual set 18' and providing a view of the virtual set 18' corresponding to the spatial orientation data related to the video camera 62 or the spatial orientation of a selected virtual camera, respectively. The video scene includes the animated graphical avatars 97, 98, 99 assigned to the actors 7, 8, 9 and/or a pictorial representation 96 (i.e. a video image) of one or more real persons 6 (host) conveyed in the camera (video) signal from the camera 62 or chroma keying module 63, respectively. The rendering module 14 is configured to generate and animate the graphical avatars 97, 98, 99 based on the respective body motion data determined by the motion determination module 13. Moreover, the lip movements and facial expression of the graphical avatar 97 are generated and performed by the rendering module 14 based on the respective lip movement data and facial expression data. For example, the rendering module 14 is based on Alias/Autodesk's MotionBuilder 7.5 Custom Build software, or another rendering software for 3D character animation for game, film, broadcast, and/or multimedia production.

The delay element 17 is a data buffer used to delay the voice signal 41 received from the remote viewer 2 by a defined constant time delay of less than one second, preferably by 0.5 seconds. This constant time delay sets the systems cycle time (processing cycle) for generating and synchronizing the animated video scene 90, including the animated avatars 97, 98, 99 and the pictorial representations 96 of the real person 6, and the delayed voice signal.

For assigning and grouping temporally related data sets and signals, time stamps are assigned to and/or included in the lip movement data, the body motion data, the camera (video) signal from the camera(s) 62, the voice signals from the viewer 2 and the real person 6, and the data associated with the animated graphical avatars 97, 98, 99. The control module 16 is configured to assign these data sets and signals to a respective processing cycle. The control module 16 tracks (based on the time stamps) the individual latencies of the data sets, and the video and audio signals involved in generating the animated video scene 90, and synchronizes the output of the animated video scene 90 and the audio component to the processing cycle, i.e. to the time delay applied to the voice signal 41 from the remote viewer 2. As each animated video scene 90 must include at least 25 frames per second, the rendering module 14 is configured to generate for the animated video scene 90 12.5 frames in the preferred cycle time of 0.5 seconds. As the animated video scene 90 and the associated audio component is ready for output at the end of every processing cycle, a live video signal 51 can be generated and broadcasted to the remote viewer 2 in real-time.

The video generating module 15 is configured to generate the live video signal 51 from the animated video scene 90 rendered and provided as output by the rendering module 14, including an audio component with at least the (delayed) voice signal 41 from the remote viewer 2 and the voice signal from the real person 6.

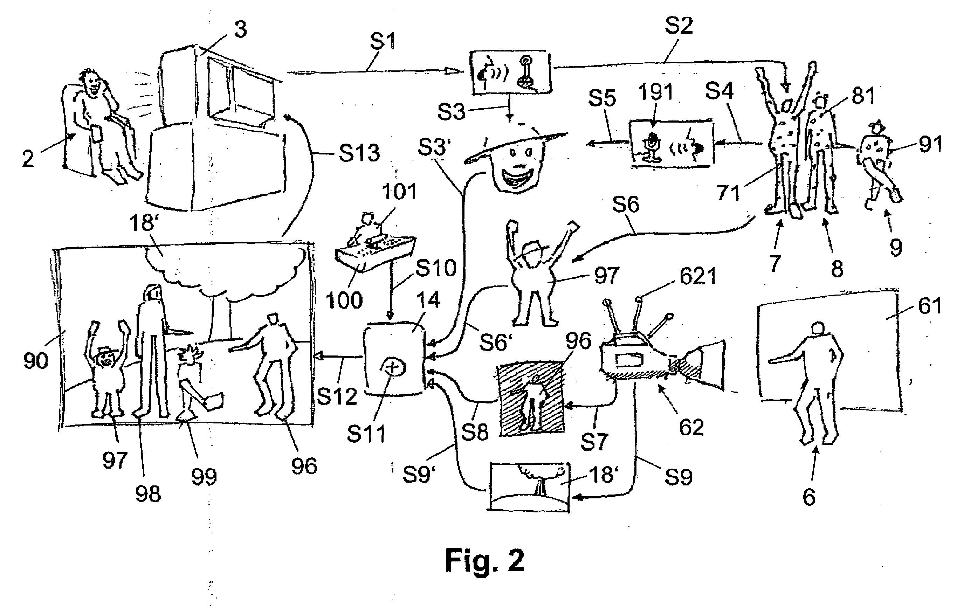

In the following paragraphs, an example of a sequence of steps executed for generating the live audio/video signal 51 is described with reference to Figure 2.

In step S1, the remote viewer 2 calls the studio and speaks to an operator or the real person 6 via telephone 42.

In step S2, the voice signal 41 corresponding to the remote viewer's call is forwarded directly without delay to the human actor 7 assigned to represent the remote viewer 2.

At the same time, in step S3, the voice signal 41 from the remote viewer is forwarded to the lip movement detection module 12. For controlling the lip movements of the avatar 97 assigned to the remote viewer 2, the lip movement detection module 12 determines from the voice signal 41 lip movement data. In step S3', the lip movement data is time stamped and transferred to the rendering module 14.

In step S4, responsive to the voice signal 41 received from the remote viewer 2, actor 7 speaks into microphone 191 voice commands or keywords corresponding to the remote viewer's mood conveyed by the voice signal 41. In step S5, for controlling facial expressions of the avatar 97 assigned to the remote viewer 2, facial expression data are determined by the voice recognition module 19. The facial expression data is time stamped and transferred to the rendering module 14.

Also responsive to the voice signal 41 received from the remote viewer 2, actor 7 performs body movements appropriate to the mood and context conveyed by the voice signal 41. In step S6, for controlling the body movements of the avatar 97 assigned to the remote viewer 2, animation data and body motion data are determined by the motion capturing system 131 and motion determination module 13. In step S6', the body motion data is time stamped and transferred to the rendering module 14.

In step S7, the real person 6 is recorded by the video camera 62 and the respective camera (video) signal is forwarded to the chroma keying module 103. The chroma keying module 103 extracts the pictorial representation 64 of the real person 6 from the background provided by the green screen 61. In step S8, the camera (video) signal comprising the extracted pictorial representation 64 of the real person 6 is time stamped and transferred to the rendering module 14.

In step S9, for determining the spatial orientation of the video camera 62 and thus the view of the selected virtual set 18', spatial orientation data are determined by the motion capturing system 131 and the motion determination module 13. In step S9', the spatial orientation data is time stamped and transferred to the rendering module 14.

in step S10, using operator console 100, producer 101 enters operating commands which are time stamped and forwarded by the operating module 10 to the rendering module 14.

In step S11, based on the data sets and signals assigned by control module 16 to the current processing cycle, the rendering module 14 generates animated graphical avatar 97 assigned to the remote viewer 2, applying lip movements controlled by the lip movement data, facial expressions controlled by the facial expression data, and body movements controlled by the body motion data associated with actor 7. Furthermore, the rendering module 14 generates animated graphical avatars 98, 99, applying body movements controlled by the body motion data associated with actors 8 or 9, respectively. The rendering module 14 generates an animated video scene 90 of the virtual set 18', including in the virtual set 18' the animated avatars 97, 98, 99 and the pictorial representation 96 of the real person 6, the view (perspective) of the virtual set 18' being controlled by the spatial orientation data.

In step S12, synchronized are the animated video scene 90 and the associated audio component, including the remote viewer's voice signal 41 and other voice signals provided by the real person 6 and other actors 8, 9. Subsequently, a live video signal 51, including an audio component signal, are generated for broadcasting.

In step S13, the live audio/video signal 51 is broadcasted via the broadcast channel 5 and can be viewed on the remote viewer's display device 3.

## Claims

1. A system (1) for generating a video signal (51), the system (1) comprising:
a communication module (11) for receiving via a telecommunications network (4) a voice signal (41) from a remote viewer (2);
a lip movement detection module (12) configured to generate from the voice signal (41) corresponding lip movement data;
a motion determination module (13) configured to generate body motion data in response to the voice signal (41);
a rendering module (14) configured to generate in real-time an animated graphical avatar (97) assigned to the remote viewer (2), lip movements of the avatar (97) being controlled by the lip movement data, and body motions of the avatar (97) being controlled by the body motion data; and
a video generating module (15) configured to generate a live video signal (51) for broadcasting to remote display devices (3), the live video signal (51) including at least the animated graphical avatar (97) and an audio component comprising the voice signal (41).

2. The system (1) according to claim 1, wherein the motion determination module (13) is further configured to generate the body motion data based on animation data representative of body motions performed by a human actor (7) in response to the voice signal (41).

3. The system (1) according to one of claims 1 or 2, further comprising a control module (16) configured to track latencies of the voice signal (41), the lip movement data, the body motion data, and the animated graphical avatar (97), and to synchronize the voice signal (41) and the animated graphical avatar (97), including the lip movement and the body motion of the avatar (97), to a defined maximum time delay from receiving the voice signal (41).

4. The system (1) according to claim 3, further comprising a delay element (11) configured to delay the voice signal (41) by the defined maximum time delay to ensure that the live video signal (51), generated within the defined maximum time delay, is ready for synchronizing with the voice signal (41).

5. The system (1) according to one of claims 1 to 4, wherein the motion determination module (13) is further configured to read within a defined maximum time delay animation data representative of spatial locations of reflective markers (71, 81, 91) attached to one or more human actors (7, 8, 9), and to determine within the defined maximum time delay from the animation data the body motion data associated with the one or more human actors (7, 8, 9).

6. The system (1) according to one of claims 1 to 5, further comprising a camera interface (103) configured to receive a camera signal from a video camera (62); wherein the motion determination module (13) is further configured to generate camera orientation data representative of a spatial orientation of the video camera (62); and wherein the rendering module (14) is further configured to generate based on the camera orientation data a view of a virtual set (18') and of a pictorial representation (96) of a real person (6) conveyed by the camera signal.

7. The system (1) according to one of claims 1 to 6, further comprising a voice recognition module (19) configured to generate facial expression data based on voice commands captured from the actor (7) assigned to the remote viewer (2); wherein the rendering module (14) is further configured to control facial expressions of the avatar (97) based on the facial expression data.

8. The system (1) according to one of claims 1 to 7, wherein the rendering module (14) is further configured to generate an animated video scene (90) (90) comprising a view of a virtual set (18'), positioned in the set being the animated graphical avatar (97) assigned to the remote viewer (2), a pictorial representation (96) of one or more real persons (6) conveyed by a camera signal filtered through a chroma keying module (63), and one or more further animated graphical avatars (98, 99) generated based on body motion data captured from one or more further human actors (8, 9); wherein the system (1) further comprises a control module (16) configured to track latencies of the voice signal (41), the lip movement data, facial expression data, the body motion data, the animated graphical avatars (97, 98, 99), and the camera signal, and to synchronize the voice signal (41), the camera signal and the animated graphical avatar (97), including the lip movement and the body motion of the avatar (97), to a defined maximum time delay from receiving the voice signal (41); and wherein the video generating module (15) is further configured to generate the live video signal (51) including the animated video scene (90).

9. The system (1) according to one of claims 1 to 8, wherein the system (1) further comprises an operating module (10) configured to receive from a human operator (101) command signals for at least one of selecting and adjusting virtual cameras to define a view of a virtual set, selecting and assigning graphical avatars (97, 98, 99) to one or more human actors (7, 8, 9), selecting and altering the virtual set (18'), and selecting and adjusting lighting in the virtual set (18'); and to control the rendering module (14) responsive and corresponding to the command signals.

10. A method of generating a video signal (51), the method comprising:
receiving in a computerized system (1) via a telecommunications network (4) a voice signal (41) from a remote viewer (2);
generating in the system (1) from the voice signal (41) corresponding lip movement data;
generating in the system (1) body motion data in response to the voice signal (41);
generating in the system (1) in real-time an animated graphical avatar (97) assigned to the remote viewer (2), lip movements of the avatar (97) being controlled by the lip movement data, and body motions of the avatar (97) being controlled by the body motion data; and
generating a live video signal (51) for broadcasting to remote display devices, the live video signal (51) including at least the animated graphical avatar (97) and an audio component comprising the voice signal (41).

11. The method according to claim 10, wherein the body motion data is generated based on animation data representative of body motions performed by a human actor (7) in response to the voice signal (41).

12. The method according to one of claims 10 or 11, further comprising tracking in the system (1) latencies of the voice signal (41), the lip movement data, the body motion data, and the animated graphical avatar (97); and synchronizing the voice signal (41) and the animated graphical avatar (97), including the lip movement and the body motion of the avatar (97), to a defined maximum time delay from receiving the voice signal (41).

13. The method according to claim 12, further comprising delaying in the system (1) the voice signal (41) by the defined maximum time delay to ensure that the live video signal (51), generated within the defined maximum time delay, is ready for synchronizing with the voice signal (41).

14. The method according to one of claims 10 to 13, wherein generating the body motion data includes reading within a defined maximum time delay animation data representative of spatial locations of reflective markers (71, 81, 91) attached to one or more human actors (7, 8, 9), and determining within the defined maximum time delay from the animation data the body motion data associated with the one or more human actors (7, 8, 9).

15. The method according to one of claims 10 to 14, further comprising receiving in the system (1) a camera signal from a video camera (62); generating in the system (1) camera orientation data representative of a spatial orientation of the video camera (62); and generating in the system (1) based on the camera orientation data a view of a virtual set (18') and of a pictorial representation (96) of a real person (6) conveyed by the camera signal.

16. The method according to one of claims 10 to 15, wherein the method further comprises generating in the system (1) facial expression data based on voice commands captured from the actor (7) assigned to the remote viewer (2); and wherein generating the animated graphical avatar (97) includes controlling facial expressions of the avatar (97) based on the facial expression data.

17. The method according to one of claims 10 to 16, further comprising generating in the system (1) an animated video scene (90) comprising a view of a virtual set (18'), positioned in the set being the animated graphical avatar (97) assigned to the remote viewer (2), a pictorial representation (96) of one or more real persons (6) conveyed by a camera signal filtered through a chroma keying module (63), and one or more further animated graphical avatars (98, 99) generated based on body motion data captured from one or more further human actors (7, 8, 9); tracking in the system (1) latencies of the voice signal (41), the lip movement data, facial expression data, the body motion data, the animated graphical avatars (97, 98, 99), and the camera signal; synchronizing in the system (1) the voice signal (41), the camera signal and the animated graphical avatar (97), including the lip movement and the body motion of the avatar (97), to a defined maximum time delay from receiving the voice signal (41); and generating the live video signal (51) including the animated video scene (90).

18. The method according to one of claims 10 to 17, further comprising receiving in the system (1) from a human operator (101) command signals for at least one of selecting and adjusting virtual cameras to define a view of a virtual set (18'), selecting and assigning graphical avatars (97, 98, 99) to one or more human actors (7, 8, 9), selecting and altering the virtual set (18'), and selecting and adjusting lighting in the virtual set (18'); and controlling the generating of the animated graphical avatar (97) responsive and corresponding to the command signals.

19. Computer program product comprising computer program code means for controlling one or more processors of a computerized system (1), such that the system (1) performs the method according to one of the claims 10 to 18.
